# EUROPEAN PATENT APPLICATION

(11) **EP 2 544 136 A1**
(43) Date of publication of application: **09.01.2013**
(21) Application number: 12175146.5
(22) Date of filing: 05.07.2012
(51) Int. Cl.: G06Q 10/06

(54) **System and method for disaster preparedness**

(30) Priority: 07.07.2011 US 201113177949
(71) Applicant: General Electric Company, Schenectady, NY 12345 (US)
(72) Inventor: Campos, Oswaldo Salvador Herrera, 76146 Queretaro (MX)
(74) Representative: Williams, Andrew Richard

(57) **Abstract**

Embodiments of the present disclosure include a system and a method. In one embodiment, the system includes an emergency preparedness system (150) having a dynamic checklist tool (152) configured to use a master checklist (170) to produce a plant-specific checklist (162) based on a selection of at least one emergency event, and to produce actionable articles (164) having at least one emergency preparedness recommendation for a plant.

## Description

### BACKGROUND

The present disclosure relates to disaster preparedness, and more particularly, to systems and methods for industrial plant disaster preparedness.

An industrial plant, such as a power generation plant, includes a plurality of interrelated equipment and processes. For example, power generation plants may include turbine systems and processes for operating and maintaining the turbine systems. However, certain unexpected events, such as earthquakes, hurricanes, tornadoes, tsunamis, and the like, may cause disruptions to plant equipment and operations.

### BRIEF DESCRIPTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment of the present disclosure, a system is provided. The system includes an emergency preparedness system having a dynamic checklist tool configured to use a master checklist to produce a plant-specific checklist based on a selection of at least one emergency event, and to produce actionable articles having at least one emergency preparedness recommendation for a plant.

In a second embodiment of the present disclosure, a method is provided. The method includes performing a plant assessment optimization service. The plant assessment optimization service preparing a checklist of items specific to the plant based on at least one disaster event. The plant assessment optimization service further includes assessing the items in the checklist. The assessing comprises evaluating items for disaster preparedness based on the at least one disaster event. The plant assessment optimization service additionally includes preparing an assessment report based on the assessing of the items.

In a third embodiment, an article of manufacture comprising non-transitory computer-readable medium is provided. The article of manufacture includes code configured to enable selection of at least one disaster event, code configured to enable identification of a plant, and code configured to present a checklist of items related to the plant and to the at least one disaster event. The article of manufacture further includes code configured to compile disaster assessment information related to each item and code configured to prepare a disaster assessment report based on the disaster assessment information.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram illustrating an embodiment of an industrial plant;
FIG. 2 is a block diagram illustrating an embodiment of an emergency preparedness system;
FIG. 3 is a screen view of an embodiment of an emergency locations tool;
FIG. 4 is a screen view of an embodiment of a dynamic checklist tool; and
FIG. 5 is a flow chart illustrating an embodiment of an emergency preparedness assessment process.

### DETAILED DESCRIPTION OF THE DISCLOSURE

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Embodiments of the present disclosure may apply to a variety of industrial plants, including but not limited to power plants, nuclear plants, chemical plants, manufacturing plants, and oil refineries. Industrial plants may include a variety of equipment and processes useful in providing a variety of operations and services. For example, power plant equipment or machinery may provide operations suitable for producing power. Likewise, chemical processing machinery may provide operations useful in the manufacturing and/or processing of chemicals. Similarly, manufacturing machinery may provide operations suitable for making or otherwise reshaping physical items.

Industrial plants may also include processes useful in plant operations. For example, maintenance processes may be in place suitable for optimizing the life and the performance of plant equipment. Business processes may also be used, for example, to calculate plant parameters such as a current quantity of desired power production based on market conditions. Additionally, processes related to state and federal regulations, codes, and/or standards (e.g., industry standards) may be used to derive operational parameters such as emission levels, testing intervals, reporting requirements, and so forth.

In certain embodiments, systems and methods are provided herein, suitable for improving disaster preparedness in industrial plants. The systems and methods may optimize disaster preparedness prior to, during, and/or after the occurrence of unexpected events, such as hurricanes, earthquakes, blizzards, tsunamis, terrorist events, tornadoes, floods, and the like. The disclosed embodiments may enable an improvement in the protection of plant equipment and infrastructure, plan and personnel. That is, plant assets, including equipment (e.g., turbine systems, heat exchange systems, fuel storage and delivery systems, and power generation systems), buildings and other fixed facilities, and plant personnel, may be more suitably protected against a multitude of undesired events using the disclosed embodiments. Likewise, the disclosed embodiments may enable plant assets to operate more efficiently after disaster events. In one embodiment, an emergency preparedness system is provided to perform a plant assessment optimization (PAO) service prior to or after the occurrence of an undesired event. The PAO service may detail a list of actionable articles, such as a PAO report, that may include recommendations for repairing, upgrading, and/or fixing plant equipment and infrastructure. The PAO report may also include recommendations for re-training personnel, updating operational and maintenance processes (e.g., plant startup process, plant shutdown process and hardware maintenance), updating business processes (e.g., supply chain process, logistic processes), and updating emergency and environmental health and safety (EHS) plans (e.g., evacuation plans) and find possible opportunities to upgrade current hardware and software.

In one embodiment, a dynamic checklist tool is provided for use in presenting a dynamic checklist of assessment items, and for use in collecting and collating assessment information. For example, the dynamic checklist tool may present the user with a list of disaster events, which the user may then select from a graphical user interface (GUI). Once the user selects one or more events, such as an earthquake and a tsunami, then the checklist tool may reconfigure a master checklist so as to present information relevant to emergency preparedness for earthquakes and tsunamis. For example, the checklist tool may begin by presenting the master checklist having a list of all equipment used in a plant, such as a power plant, that is likely to be affected by earthquakes and tsunamis, or other user selected events. The master checklist may be refined according to the specific instance of the power plant undergoing assessment. That is, the checklist tool may dynamically reconfigure the presentation of equipment and plant facilities based on the known equipment, plant facilities, personnel, processes, and other items related to a specific power plant (i.e., a power plant located at a specific geographic site). The user may then select individual equipment, facilities, processes (e.g., turbine startup, turbine shutdown, plant shutdown, plant startup), personnel types (e.g., turbine operator, boiler technician, electrician, engineer, manager), processes, and related information, as described below, to further narrow the checklist items.

Once the master checklist items have been sufficiently filtered or narrowed, the filtered checklist (i.e., plant-specific checklist) may be used in performing the PAO service. In one embodiment, the dynamic checklist tool may enable the capture of plant assessment information based on the filtered checklist. For example, equipment condition, equipment utilization, personnel lists, supplier lists, current plant power needs, insurance information, expected customer power needs (e.g., power grid needs), and so forth, may be entered into the checklist tool. The information captured may include textual information, spoken information (e.g., audio), instrumentation information (e.g., sensor data), multimedia (e.g., pictures, audio, video), and the like.

The checklist tool may then provide for one or more actionable articles useful in preparing the plant for a disaster event, useful during the actual disaster event, and/or useful after the disaster event. The actionable articles may include, for example, the PAO report detailing the plant assessment information, as well as suggested upgrades or repairs. For example, the PAO report may include service lists detailing a need for performing certain services, such as realigning and/or rebalancing of turbine shafts, upgrades to equipment foundations (e.g., cement foundations), the replacement of certain equipment, the re-training of personnel, the upgrades of certain procedures (e.g., system startup and shutdown procedures, emergency trip procedures), and the creation or updates to disaster preparedness plans. The PAO report may also include equipment replacement lists, equipment upgrades list, process upgrades lists (e.g., operational processes, logistic processes), human resource recommendations (e.g., re-training personnel, hiring new personnel) and the possible identification of new product development.

The actionable articles may also include control actions suitable for implementation, for example, by a plant controller, such as, a distributed control system (DCS), a manufacturing execution system (MES), a supervisor control and data acquisition (SCADA) system, and/or a human machine interface (HMI) system. Indeed, the emergency preparedness system may interface with one or more plant controllers, and issue control actions useful before, during, and after disaster events. For example, control actions useful before disaster events may include uploading of recent firmware and/or software updates to one or more systems in the plant. Control actions useful during the disaster events may include executing software and manual processes for safely shutting down or otherwise reducing plant operations. Likewise, control actions useful after disaster events may include executing software and manual processes for safely restarting plant operations. In this way, a disaster assessment may be prepared, useful in minimizing the impact of disaster events on plant operations.

In another embodiment, the PAO service may be provided by using a paper version of the filtered checklist. Indeed, both online (e.g., web-based) as well as paper versions of the checklist may be provided, useful in performing a PAO service. For example, a PAO engineer may use a printed filtered checklist as a guide to capture the aforementioned plant assessment information, and then create the PAO report. By providing multiple methods of performing plant assessments (e.g., electronic, paper-based), a disaster assessment team may more flexibly and efficiently perform the PAO service.

The disclosed embodiments also include an emergency locations tool suitable for visualizing plant locations throughout various geographic regions, and for analyzing plant locations that may benefit from the systems and methods disclosed herein, such as the aforementioned plant assessments. That is, the emergency locations tool may suggest a list of one or more plants that may benefit from the PAO service. Additionally, the emergency locations tool may enable a visualization of ongoing disaster events, including any data available from plants affected by the events. By using the emergency locations tool, improved synchronization and leveraging of assets may be realized. For example, logistic supply chains may be implemented, suitable for delivering replacement parts, equipment, and/or personnel, to affected locations based on data received during disaster events.

The disclosed embodiments also include a PAO process, suitable for using the emergency preparedness system and/or paper-based checklists to analyze an industrial plant, such as a power plant, chemical plant, manufacturing plant, and the like, so as to produce actionable articles, including the preparation assessment optimization report. Indeed, the method may analyze all facets of plant operations, from receipt of raw materials (e.g., fuels, consumables, supplies), to all internal plant operations (e.g., power production, chemical processes, manufacturing processes), to the delivery of the plant's products (e.g., electrical power, manufactured material, chemicals), and provide one or more actionable articles, including a comprehensive PAO report.

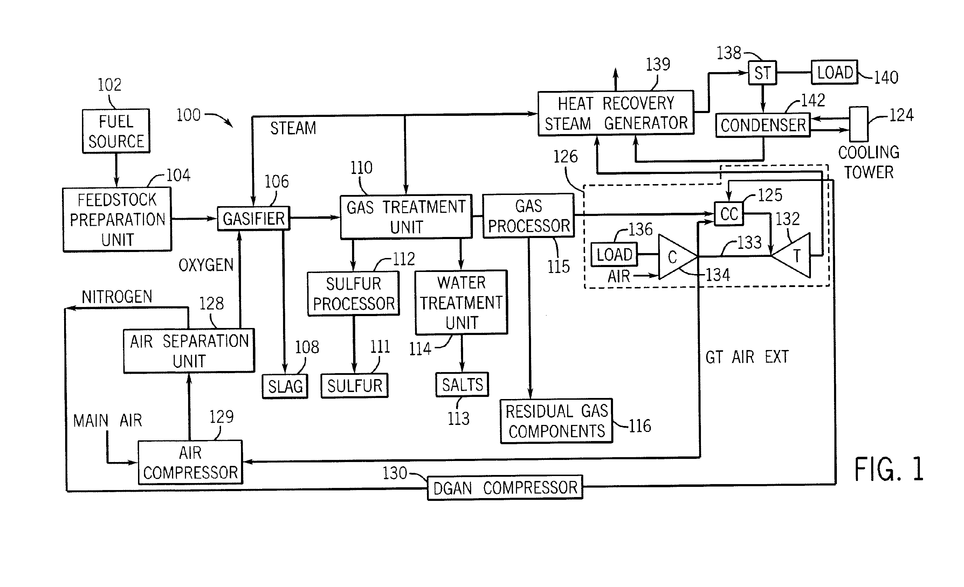

It may be useful to describe a plant, such as an embodiment of a power plant 100 as depicted in FIG. 1, which may incorporate the systems and methods described herein. Accordingly, FIG. 1 depicts an embodiment of an integrated gasification combined cycle (IGCC) power plant 100. In the depicted embodiment, the IGCC power plant 100 may use a carbonaceous fuel (e.g., coal, biomass) to produce and burn a synthetic gas, i.e., a syngas, so as to produce power. Elements of the IGCC power plant 100 may include a fuel source 102, such as a carbonaceous feedstock, that may be utilized as a source of energy for the IGCC power plant 100. The fuel source 102 may include coal, petroleum coke, biomass, wood-based materials, agricultural waste, tars, oven gas, orimulsion, lignite, and asphalt, or other carbon containing items.

The fuel of the fuel source 102 may be passed to a feedstock preparation unit 104. The feedstock preparation unit 104 may, for example, resize or reshape the fuel source 102 by chopping, milling, shredding, pulverizing, briquetting, or palletizing the fuel source 102 to generate feedstock. Additionally, water, or other suitable liquids may be added to the fuel source 102 in the feedstock preparation unit 104 to create slurry feedstock. In certain embodiments, no liquid is added to the fuel source, thus yielding dry feedstock. The feedstock may be conveyed into a gasifier 106 for use in gasification operations. The feedstock preparation unit 104, the gasifier 106, and all other plant equipment described with respect to FIG. 1, may be analyzed with a view towards disaster preparation and recovery. Indeed, the systems and methods described herein may enable an improved disaster preparation and/or recovery for all systems found in the plant 100.

The gasifier 106 may convert the feedstock into a syngas, e.g., a combination of carbon monoxide and hydrogen. This conversion may be accomplished by subjecting the feedstock to a controlled amount of any moderator and limited oxygen at elevated pressures (e.g., from approximately 40 - 90 bar) and elevated temperatures (e.g., approximately 1200° C - 1500° C), depending on the type of feedstock used. The heating of the feedstock during a pyrolysis process may generate a solid (e.g., char) and residue gases (e.g., carbon monoxide, hydrogen, and nitrogen).

A combustion process may then occur in the gasifier 106. The combustion may include introducing oxygen to the char and residue gases. The char and residue gases may react with the oxygen to form CO₂ and carbon monoxide (CO), which provides heat for the subsequent gasification reactions. The temperatures during the combustion process may range from approximately 1200° C to approximately 1500° C. In addition, steam may be introduced into the gasifier 106. The gasifier 106 utilizes steam and limited oxygen to allow some of the feedstock to be burned to produce carbon monoxide and energy, which may drive a second reaction that converts further feedstock to hydrogen and additional carbon dioxide.

In this way, a resultant gas is manufactured by the gasifier 106. This resultant gas may include approximately 85% of carbon monoxide and hydrogen in equal proportions, as well as Argon, CH₄, HCl, HF, COS, NH₃, HCN, and H₂S (based on the sulfur content of the feedstock). This resultant gas may be termed untreated syngas, since it contains, for example, H₂S. The gasifier 106 may also generate waste, such as slag 108, which may be a wet ash material. This slag 108 may be removed from the gasifier 106 and disposed of, for example, as road base or as another building material. To treat the untreated syngas, a gas treatment unit 110 may be utilized. In one embodiment, the gas treatment unit 110 may include one or more water gas shift reactors. The water gas shift reactors may aid in elevating the level of hydrogen (H₂) and CO₂ in the fuel by converting the CO and H₂O in the syngas into CO₂ and H₂ (e.g., sour shifting). The gas treatment unit 110 may also scrub the untreated syngas to remove the HCl, HF, COS, HCN, and H₂S from the untreated syngas, which may include separation of sulfur 111 in a sulfur processor 112 component of the gas treatment unit 110. Furthermore, the gas treatment unit 110 may separate salts 113 from the untreated syngas via a water treatment unit 114 that may utilize water purification techniques to generate usable salts 113 from the untreated syngas. Subsequently, the gas from the gas treatment unit 110 may include treated syngas, (e.g., the sulfur 111 has been removed from the syngas), with trace amounts of other chemicals, e.g., NH₃ (ammonia) and CH₄ (methane).

A gas processor 115 may be used to remove additional residual gas components 116, such as ammonia and methane, as well as methanol or any residual chemicals from the treated syngas. Argon may also be recovered. Argon is a valuable product which may be recovered using, for example, cryogenic techniques. However, removal of residual gas components from the treated syngas is optional, since the treated syngas may be utilized as a fuel even when containing the residual gas components, e.g., tail gas.

Continuing with the syngas processing, once the CO₂ has been captured from the syngas, the treated syngas may be then transmitted to a combustor 125, e.g., a combustion chamber, of a gas turbine engine 126 as combustible fuel. The IGCC power plant 100 may further include an air separation unit (ASU) 128. The ASU 128 may operate to separate air into component gases by, for example, distillation techniques. The ASU 128 may separate oxygen from the air supplied to it from a supplemental air compressor 129, and the ASU 128 may transfer the separated oxygen to the gasifier 106. Additionally the ASU 128 may transmit separated nitrogen to a diluent nitrogen (DGAN) compressor 130.

The DGAN compressor 130 may compress the nitrogen received from the ASU 128 at least to pressure levels equal to those in the combustor 125, so as not to interfere with the proper combustion of the syngas. Thus, once the DGAN compressor 130 has adequately compressed the nitrogen to a proper level, the DGAN compressor 130 may transmit the compressed nitrogen to the combustor 125 of the gas turbine engine 126. The nitrogen may be used as a diluent to facilitate control of emissions, for example.

As described previously, the compressed nitrogen may be transmitted from the DGAN compressor 130 to the combustor 125 of the gas turbine engine 126. The gas turbine engine 126 may include a turbine 132, a drive shaft 133 and a compressor 134, as well as the combustor 125. The combustor 125 may receive fuel, such as syngas, which may be injected under pressure from fuel nozzles. This fuel may be mixed with compressed air as well as compressed nitrogen from the DGAN compressor 130, and combusted within combustor 125. This combustion may create hot pressurized exhaust gases.

The combustor 125 may direct the exhaust gases towards an exhaust outlet of the turbine 132. As the exhaust gases from the combustor 125 pass through the turbine 132, the exhaust gases force turbine blades in the turbine 132 to rotate the drive shaft 133 along an axis of the gas turbine engine 126. As illustrated, the drive shaft 133 is connected to various components of the gas turbine engine 126, including the compressor 134.

The drive shaft 133 may connect the turbine 132 to the compressor 134 to form a rotor. The compressor 134 may include blades coupled to the drive shaft 133. Thus, rotation of turbine blades in the turbine 132 may cause the drive shaft 133 connecting the turbine 132 to the compressor 134 to rotate blades within the compressor 134. This rotation of blades in the compressor 134 causes the compressor 134 to compress air received via an air intake in the compressor 134. The compressed air may then be fed to the combustor 125 and mixed with fuel and compressed nitrogen to allow for higher efficiency combustion. Drive shaft 133 may also be connected to a load 136, which may be a stationary load, such as an electrical generator for producing electrical power, for example, in a power plant. Indeed, the load 136 may be any suitable device that is powered by the rotational output of the gas turbine engine 126. The IGCC power plant 100 also may include a steam turbine engine 138 and a heat recovery steam generation (HRSG) system 139. The steam turbine engine 138 may drive a second load 140, such as an electrical generator for generating electrical power. However, both the first and second loads 136, 140 may be other types of loads capable of being driven by the gas turbine engine 126 and steam turbine engine 138. In addition, although the gas turbine engine 126 and steam turbine engine 138 may drive separate loads 136 and 140, as shown in the illustrated embodiment, the gas turbine engine 126 and steam turbine engine 138 may also be utilized in tandem to drive a single load via a single shaft. The specific configuration of the steam turbine engine 138, as well as the gas turbine engine 126, may be implementation-specific and may include any combination of sections.

Heated exhaust gas from the gas turbine engine 126 may be transported into the HRSG 139 and used to heat water and produce steam used to power the steam turbine engine 138. Exhaust from, for example, a low-pressure section of the steam turbine engine 138 may be directed into a condenser 142. The condenser 142 may utilize the cooling tower 124 to exchange heated water for chilled water. The cooling tower 124 acts to provide cool water to the condenser 142 to aid in condensing the steam transmitted to the condenser 142 from the steam turbine engine 138. Condensate from the condenser 142 may, in turn, be directed into the HRSG 139. Again, exhaust from the gas turbine engine 126 may also be directed into the HRSG 139 to heat the water from the condenser 142 and produce steam.

In combined cycle power plants such as IGCC power plant 100, hot exhaust may flow from the gas turbine engine 126 and pass to the HRSG 139, where it may be used to generate high-pressure, high-temperature steam. The steam produced by the HRSG 139 may then be passed through the steam turbine engine 138 for power generation. In addition, the produced steam may also be supplied to any other processes where steam may be used, such as to the gasifier 106. The gas turbine engine 126 generation cycle is often referred to as the "topping cycle," whereas the steam turbine engine 126 generation cycle is often referred to as the "bottoming cycle." By combining these two cycles as illustrated in FIG. 1, the IGCC power plant 100 may lead to greater efficiencies in both cycles. In particular, exhaust heat from the topping cycle may be captured and used to generate steam for use in the bottoming cycle.

The systems and methods described herein may be used to analyze all systems of the IGCC plant 100, such as the feedstock preparation unit 104, the gasifier 106, the gas treatment unit 110, the sulfur processor 112, the water treatment unit 114, the gas processor 115, the cooling tower 124, the turbine system 126, the air compressor 129, the DGAN compressor 130, the steam turbine 138, the HRSG 139, load 140, and/or the condenser 142. It is also to be noted that the systems and methods described herein are applicable to other types of power plants, such as power plants that do not include a gasifier 106. For example, power plants including nuclear powered turbine systems, wind turbine systems, and hydro-powered turbine systems may use the systems and methods described herein. Additionally, the systems and methods described herein are not limited to power plants, and may be used in a variety of industrial plants, such as chemical plants, manufacturing plants, oil refineries, and the like.

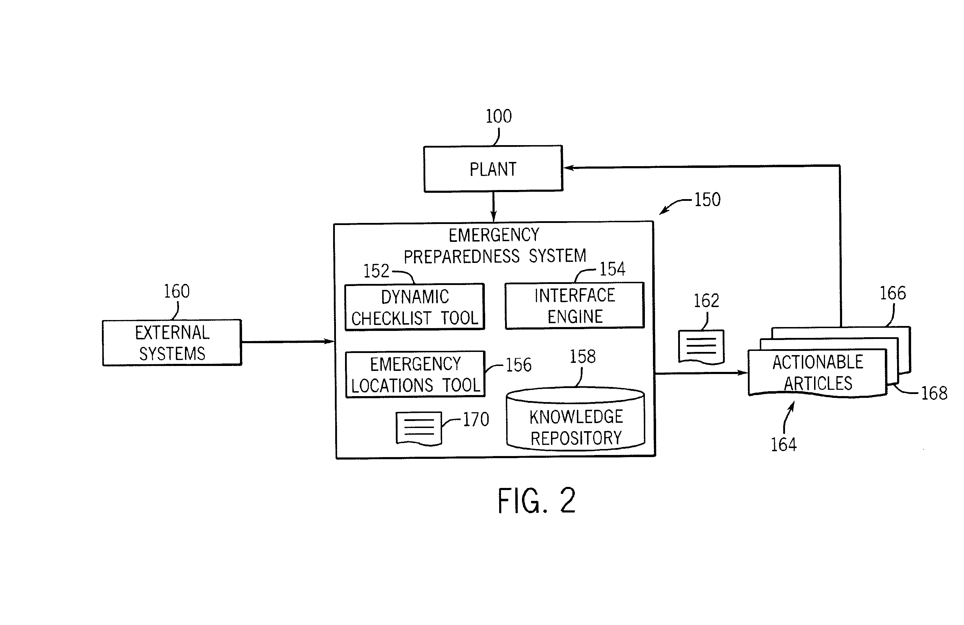

FIG. 2 is a block diagram illustrating an embodiment of an emergency preparedness system 150 communicatively connected to the plant 100 of FIG 1. The emergency preparedness system 150 may include non-transient machine readable media storing code or computer instructions that may be used by a computing device to implement the techniques disclosed herein. That is, the emergency preparedness system 150 may be a hardware-based tool, a software-based tool, or a combination thereof. For example, the emergency preparedness system 150 may be a computer with software disposed thereon, or it could be computer instructions or code disposed on a non-transitory, machine-readable medium. In the illustrated embodiment, the emergency preparedness system 150 includes a dynamic checklist tool 152, an inference engine 154, an emergency locations tool 156, and a knowledge repository 158. It is to be noted that, in other embodiments, the dynamic checklist tool 152, the inference engine 154, the emergency locations tool 156, and the knowledge repository 158 may be hosted in separate computers or in a system of distributed computers (e.g., "cloud" computing).

The knowledge repository 158 may be used by the dynamic checklist tool 152, the inference engine 154, and the emergency locations tool 156 as a database and/or as a repository of plant 100 knowledge. For example, the knowledge repository 158 may include knowledge, rules, and data related to plant equipment, plant assessment procedures, disaster prevention, and/or disaster recovery. In one embodiment, the knowledge repository 158 may include expert system rules that may take the general form of an "if ... then ..." rule with the "if" portion being defined as the rule antecedent and the "then" portion being defined as the rule consequent. For example, rules, such as, "if preparedness_event = earthquake then turbine_foundation = reinforced_steel," "if recovery_event = tornado then check_for_turbine_shaft_balance = true," "if ongoing_event = flood then plant_shutdown = true" may be used to determine consequent items related to equipment, plant process, and/or personnel.

The emergency preparedness system 150 may be communicatively connected to one or more plants, such as the depicted plant 100. For example, the emergency preparedness system 150 may be connected to electronic plant logs (or allow the import of paper logs), such as performance logs (e.g. power produced in Watts), maintenance logs (e.g., maintenance type, maintenance date), maintenance schedules, and the like. The emergency preparedness system may also be connected to sensors in the plant 100, such as speed sensors, flow sensors, valve position sensors, vibration sensors, clearance sensors (e.g., measuring distances between a rotating component and a stationary component), temperature sensors, pressure sensors, production of power sensors (e.g., wattage produced), emission sensors, leakage sensors and so forth.

Additionally, the emergency preparedness system 150 may be connected to external systems 160, such as geological databases useful in identifying plants 100 that may be in locations prone to certain disaster events. For example, plants 100 that may be near active faults prone to cause earthquakes, near hurricane-prone areas, tsunami prone areas, fire prone areas, mudslide prone areas, blizzard prone areas, and tornado prone areas, may be identified. Further, the external systems 160 may include weather prediction systems, seismic activity systems (e.g., earthquake warning systems), weather alert systems (e.g., tornado alert systems, tsunami alert systems, hurricane alert systems), and/or emergency information broadcasting systems.

In one embodiment, the emergency preparedness system 150 may output a plant-specific checklist 162 and actionable articles 164 that may be suitable for improving emergency preparedness in the plant 100. Certain of actionable items 164 may include reports, such as a PAO report 166, that details plant assessment information, as well as suggested upgrades or repairs. Other actionable items 164 may include control instructions 168 suitable for implementation by the plant control system(s). By deriving the actionable articles 164, the emergency preparedness system 150 may improve recovery times and aid in minimizing the impact of disaster events on the plant 100.

In order to derive the plant-specific checklist 162 and the actionable articles 166, a user, such as the PAO engineer, may use the dynamic checklist tool 152. The dynamic checklist tool 152 may include a reconfigurable GUI suitable for entering plant assessment information. The dynamic checklist tool 152 may also filter a master checklist 170 based on the entered information, and produce the plant-specific checklist 162. The master checklist 170 may contain a list of items related to various types of plants and plant types. For example, a comprehensive list of all equipment used in power plants, chemical plants, refining plants, and manufacturing plants may be included in the master checklist 170. The master checklist 170 may be further refined through user selection to arrive at the plant-specific checklist 162. For example, in one embodiment, the user may select a particular type of plant 100, and the dynamic checklist tool 152 may then show only equipment related to that type of plant 100. By iteratively presenting selections and questions related to the plant 100 of interest, the dynamic checklist tool 152 may further refine the master checklist 170. In this way, the user may "drill down" and answer information pertaining to the plant 100 to derive the plant-specific checklist 162. Indeed, the user may answer information pertaining to every system in the plant 100, such as those systems described with respect to FIG. 1. For example, information related to the feedstock preparation unit 104, the gasifier 106, the gas treatment unit 110, the sulfur processor 112, the water treatment unit 114, the gas processor 115, the cooling tower 124, the turbine system 126, the air compressor 129, the DGAN compressor 130, the steam turbine system 138, the HRSG 139, load 140, and/or the condenser 142 may be selected from a list detailing the systems installed in the plant 100. As information for each plant 100 system is entered, and further details of each system are specified (e.g., system type, system age, maintenance records), the dynamic checklist tool 152 may iteratively refine the master checklist 170 to derive a comprehensive, plant-specific checklist 162 suitable for performing the PAO service. The plant-specific checklist 162 may detail all equipment to assess, as well as personnel assessments to perform, and plant processes or business processes to review.

In another embodiment, the plant-specific checklist 162 may be derived automatically. Indeed, the dynamic checklist tool 152 may query systems such as electronic maintenance logs, power production logs, bill of material (BOM) records, design records and/or purchasing records so as to automatically derive the specific details of the systems installed in the plant 100, including the feedstock preparation unit 104, the gasifier 106, the gas treatment unit 110, the sulfur processor 112, the water treatment unit 114, the gas processor 115, the cooling tower 124, the turbine system 126, the air compressor 129, the DGAN compressor 130, the steam turbine 138, the HRSG 139, load 140, and/or the condenser 142. In this way, the plant-specific checklist 162 specific for the plant 100 may be prepared automatically by the system 150.

The plant-specific assessment checklist 162 may then be used to prepare the one or more actionable articles 166, such as the PAO report 166. In one embodiment, a plant assessment engineer may manually fill in information based on each checklist item found in the plant-specific checklist 162, so as to produce the PAO report 166. For example, for plants having turbine systems 126 shown in FIG. 1, one checklist item may include a balance check on the turbine shaft 133. Accordingly, the plant assessment engineer may perform the balance check and provide a balance check report. Indeed, checklist items included in the plant-specific checklist 162 may be used to perform a detailed assessment of the plant 100. Accordingly, the actionable articles 168 may include a detailed PAO report 166 of the plant assessment activities, including any suggestions or recommendations for repair, replacement, and/or upgrades of plant equipment. For example, should the turbine shaft 133 be out of balance, then a recommendation to "true" or balance the turbine shaft 133 may be included. Likewise, should personnel lack desired credentials, then the suggestions may include personnel re-training. Additionally, the actionable articles 168 may include suggestions for changes or additions in plant procedures, such as new procedures for starting and stopping the turbine system 126 based on emergency load conditions. Further, the suggestions may include replacement or additions to software or computer instructions, such as upgrading of firmware and/or controller software. Business processes related to the plant 100 may also be recommended for update or implementation. For example, supply chain processes suitable for procuring spare parts, equipment, and/or temporary personnel may be recommended. Emergency plans may also be updated, such as emergency response procedures, plant evacuations, regional evacuations, interfacing with the media, interfacing with regulatory authorities, and/or interfacing with outside emergency response teams. In this way, the actionable articles 168 may enable an improvement in emergency preparations, response, and recovery.

In one embodiment, the plant assessment engineer may use the inference engine 154 in conjunction with the knowledge repository 158 to derive the actionable articles 168. For example, a set of plant assessment rules, such as plant assessment expert system rules derived through human knowledge and experience, may be used to more efficiently perform the plant assessment activities. The plant assessment rules may detail what type of equipment assessment, assessment of processes, and/or assessment of human resources, to conduct, based on certain rule antecedents. For example, the inference engine 154 may infer a recommendation that the turbine shaft 133 may need rebalancing based on certain sensor readings (e.g., clearance sensor readings). Likewise, the inference engine 154 may infer a recommendation that certain new personnel positions may need to be created, such as turbine emergency response personnel, based on personnel qualifications and certifications data. Similarly, the inference engine 154 may infer that certain plant procedures may need to be modified, such as the use of certain turbine ramp curves for startup and shutdown of the turbine system 126 during and/or after disaster events. By using the inference engine 154 to leverage the expertise captured in the knowledge repository, it may be possible to further optimize the performance assessment activities.

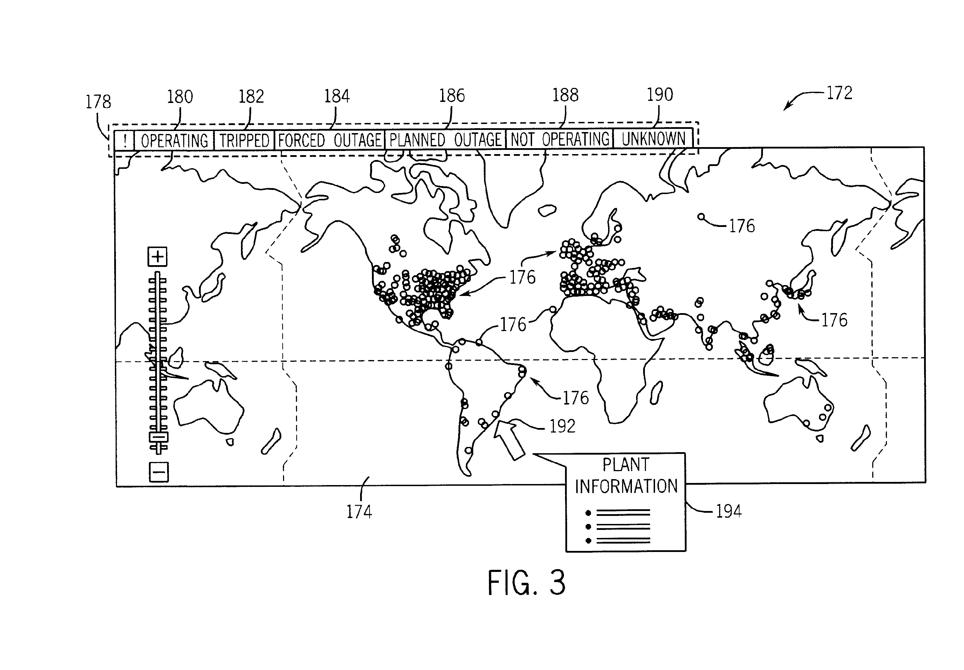

The emergency locations tool 156 may also leverage information contained in the knowledge repository 158. For example, the knowledge repository 158 may include information correlating a geographical location for the plant 100 with a risk of occurrences of disaster events. Indeed, the emergency preparedness system 150 may include the emergency locations tool 156, suitable for mapping geographic locations of certain plants 100 and correlating the mapped location with occurrences of disaster events so as to enable preparations before, during, and/ or after disaster events. For example, FIG. 3 illustrates a screen 172 of the emergency locations tool 156 indicating a geographic map of the world 174, with circular icons 176 identifying specific plants 100. In one embodiment, the circular icons 176 may be color coded to correspond to a plant 100 status. Accordingly, a color legend 178 may be provided, including different colors 180, 182, 184, 186, 188, and 190 for operating icons, tripped icons, forced outage icons, planned outage icons, plant not operating icons, and unknown status icons, respectively. For example, operating plants 180 may have green colored icons, tripped plants 182 may have red colored icons, forced outage plants 184 may have pink colored icons, planned outage plants 186, plants that are not operational 188 may have blue icons, and plants in an unknown status 190 may have grey icons. In this way, the user may quickly scan the map 174 to identify the status of all plants 100. The screen 172 may also be useful in determining which of the plants 100 may benefit from the PAO service. For example, a "mouse over" action may be used, as depicted, to move a mouse icon 192 over individual plant 100 icons to identify plants 100 that are located in certain areas more prone to occurrences of disaster events. Such plants 100 may benefit from a plant assessment prior to the occurrence of undesired events. By identifying plants 100 that may benefit from the PAO service, and by performing the PAO, the plant 100 may be more suitably prepared for disaster occurrences.

In one embodiment, external systems, such as databases kept by the United States Geological Survey (e.g., flood plain databases, geographic fault databases), the United States National Climatic Data Center (e.g., tornado reports, hurricane reports, tsunami reports), and the Climate Prediction Center (e.g., weather reports) databases, may be used to gather data related to the location of the plants 100 depicted in the map 174. Data from these systems may then be stored in the knowledge repository 158 shown in FIG. 2, and updated periodically (e.g., every hour, every day, every week, every month, every year). The user may also run a disaster event locations report, suitable for providing a list of all plants 100, along with a correlation of risk for a given disaster event or events, for each of the plants 100. In this way, the user may determine plants 100 that may benefit from emergency preparedness plant assessments.

During disaster event occurrences, the screen 172 may show blinking icons or other visual and audio indications of ongoing forced outage in the plants 100. For example, seismic systems may be included in the external systems 160 shown in FIG. 2, and data from the seismic systems may be used to derive the occurrences of earthquakes. New feeds (e.g., syndicated feeds, online feeds) may also be included in the external systems 160 and parsed for keywords indicating ongoing disaster events. The user may then "mouse over" the blinking icon, and a pop-up window 194 may then present information regarding the status of the plant 100, as well as any previously prepared PAO reports 166, which may include information such as any current equipment lists, backup equipment lists, employee lists, emergency preparedness plans, contact information for local emergency response teams, and/or supply chain information (e.g., fuel suppliers information, chemical suppliers information, water suppliers information, equipment suppliers information). Accordingly, the user may view information useful during occurrences of emergency events.

After disaster events, the user may also "mouse over" a plant to acquire information useful in restarting plant operations. For example, the screen 172 may inform the user of procedures useful in restarting turbine systems after emergency events, procedures useful in synchronizing turbine systems with the electrical grid, information useful in locating backup equipment, and/or backup personnel. As mentioned above, the information presented may also include information such as current equipment lists, backup equipment lists, employee lists, emergency preparedness plans, contact information for local emergency response teams, and/or supply chain information

(e.g., fuel suppliers information, chemical suppliers information, water suppliers information, equipment suppliers information). Such information may also be useful in post-disaster activities. In this way, the screen 172 may present information useful prior to, during, and/or after disaster events.

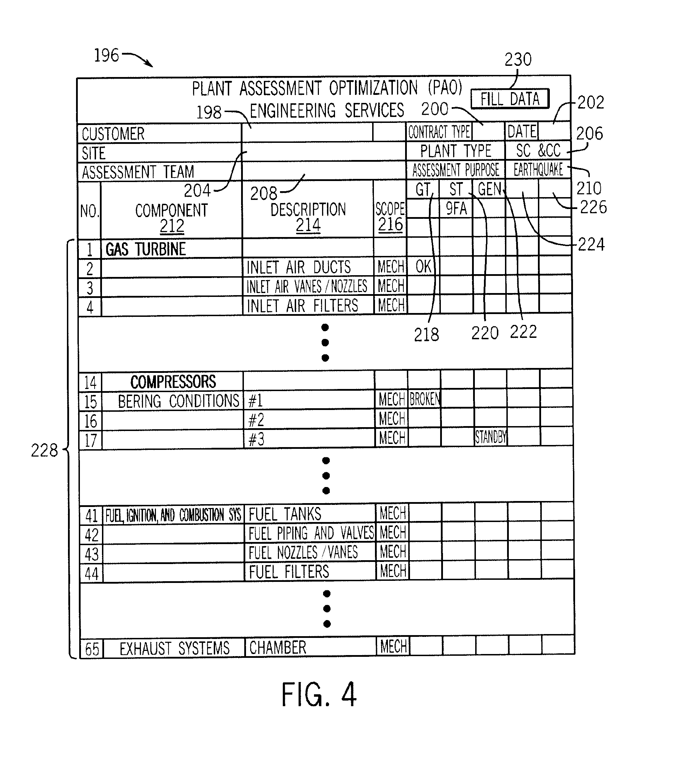

FIG. 4 depicts an embodiment of a screen 196 of the dynamic checklist tool 152 shown in FIG. 2. In the illustrated embodiment, the screen 196 includes a customer information slot 198, a contract type slot 200, a date slot 202, a site slot 204, a plant type slot 206, an assessment team slot 208, and an assessment purpose slot 210. As mentioned above with respect to FIG. 2, the user, such as a PAO engineer, may enter information in each of the slots 198, 200, 202, 204, 206, 208, and 210. For example, the customer information slot 198 may be used to enter a customer name or purchase order serial number. The contract type slot 200 may be used to enter a contract type for the PAO service to be performed, such as a fixed price contract, hourly rate contract, and shared cost contract. The date slot 202 may be used to enter a date to begin PAO services, to end PAO services, a contract date, or any other related date. The site slot 204 may be used to capture a geographic location or name for the plant 100, such as a "Chile Atacama Site 1", "Corpus Christi site," or a set of geographic coordinates indicative of the plant's geographic location.

The plant type slot 206 may be used to indicate the type of plant 100, for example, integrated gasification combined cycle (IGGC) power plants, single cycle (SC) power plants, combined cycle (CC) power plants, chemical plants, manufacturing plants, and/or oil refineries. The assessment team slot 208 may be used to indicate an assessment team name and/or individual names of assessment team personnel. The assessment purpose slot 210 may be used to capture the type of event the PAO service is directed to, such as hurricanes, earthquakes, blizzards, tsunamis, terrorist events, tornadoes, floods, and combinations thereof.

In one embodiment, the user may then manually enter row 228 information for capture by the screen 196. In another embodiment, the screen 196 may be associated with the master checklist 170 (shown in FIG. 2). Accordingly, the row data 228 may automatically entered by copying the master checklist 170. In yet another embodiment, the user may press a <FILL DATA> command button 230, and the dynamic checklist tool 152 shown in FIG. 2 may then use the information captured in the slots 198, 200, 202, 204, 206, 208, and 210 to automatically fill the depicted rows 228 with data associated with a particular plant site, plant type, and/or assessment team. For example, plant 100, BOMs, maintenance logs, operator logs, and/or the knowledge repository 158 may be queried, and the data received may then be used to automatically fill in the data in the rows 228. In this way, the dynamic checklist tool 152 may pre-fill the screen with data. The data in the rows 228 may thus correspond to the plant-specific checklist 162. That is, the rows 228 (and screen 196) may include the electronic equivalent of the data found in the plant-specific checklist 162.

In one embodiment, a PAO engineer may then use the screen 196 to perform the PAO service. For example, the first row of the screen 196 is displaying "inlet air ducts" for the gas turbine. Accordingly, the PAO engineer may inspect the turbine inlets air ducts, and record the inspection results in the column corresponding to a given turbine (e.g., gas turbine GT, steam turbine ST, generator GEN). A detailed turbine inlet air duct inspection report may then be provided, that includes any recommendations for repair, replacement, or upgrade of the turbine inlet air duct. The engineer may then scroll to the next row of the screen, and perform an inspection listed as the second item in the screen 196, such as an inlet air vanes and nozzle inspection, and then record any findings. As mentioned above, the findings may include a detailed inspection report with recommendations to repair, replace or upgrade the turbine inlet air vanes and nozzles. By scrolling down the rows of the screen 196, the PAO engineer may perform an exhaustive assessment of the plant 100 with a view towards the assessment purpose(s) stored in the slot 210, such as the depicted earthquake assessment purpose. It is to be noted that additionally or alternatively to the equipment depicted in the rows 228 of the screen 196, the rows of the screen 196 may include rows listing plant processes (e.g., turbine startup, turbine shutdowns, turbine trips), business processes (e.g., supply chain processes, capital financing processes), software (e.g., firmware, control software, business software), and/or human resources (e.g., training, abilities, certification). In this way, the PAO service may be provided, including the detailed PAO report 166 having recommendations for equipment, personnel, and/or processes.

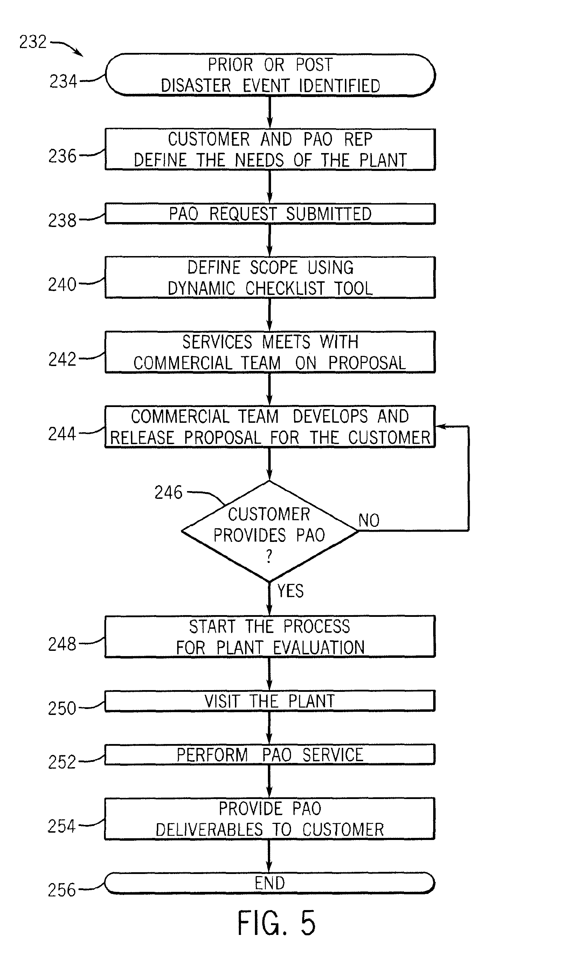

FIG. 5 is a flowchart depicting an embodiment of a process 232 that may be used to interface with a plant 100 owner or operator (e.g., customer) and to perform the PAO service. In the depicted embodiment, a prior or post disaster event is identified (block 234). For example, a PAO representative may use the emergency locations tool 156 shown in FIG. 2, and in conjunction with the customer, identify one or more disaster events to prepare for or to recover from (block 234). The customer and the PAO representative may then define the needs of the plant 100 (block 236). For example, the customer may provide further information, such as the need to have the PAO service performed on certain plants 100, certain systems in the plant (e.g., the feedstock preparation unit 104, the gasifier 106, the gas treatment unit 110, the sulfur processor 112, the water treatment unit 114, the gas processor 115, the cooling tower 124, the turbine system 126, the air compressor 129, the DGAN compressor 130, the steam turbine 138, the HRSG 139, load 140, the condenser 142), and/or certain plant 100 facilities. A PAO request may then be submitted (block 238), for example to a PAO engineering team or a PAO service provider. The PAO request may be submitted in any number of formats, including an electronic format detailing a list of equipment, facilities, and/or any other specifics of the PAO service that is being requested. The scope of the PAO service may then be defmed (block 240), for example, by using the dynamic checklist tool 152 and/or screen 196 as described above with respect to FIGS. 2 and 4. That is, the dynamic checklist tool 152 may be used to provide the plant-specific checklist 162 based on the submitted PAO request (block 238), thus narrowing the scope of work to the items found in the checklist 162. Likewise, the screen 196 may provide for a list of items to assess. For example, the PAO engineer may use the checklist 162 and/or screen 196 to determine which equipment, facilities, and or processes are to be assessed during the PAO service, as well as the type of assessment that is to be provided (e.g., mechanical inspection, electrical inspection, external component inspection, internal component inspection, software audit).

PAO service personnel may then interface with commercial team representatives (block 242) to collaborate on the commercial aspects of the PAO service, such as costs, delivery schedules, personnel (PAO personnel, support personnel, administrative personnel) to be used, and travel allowances. The commercial team may then develop and release a PAO service proposal to the customer (block 244). The PAO proposal may include statement of work (SOW) detailing a list of all services to be performed, any related costs, a schedule for performance, and any other contractual obligations. Should the customer not agree to the proposal (decision 246), then the commercial team may iteratively work with the customer to address any outstanding issues and resubmit the proposal (block 244). Should the customer agree to the proposal (decision 246) and provide a purchase order (PO), the PAO team may then begin the process for plant evaluation (block 248). For example, personnel may be notified of new assignments, travel plans may be issued, and more generally, arrangements may be set in place to provide the PAO service. The PAO team may then visit the plant (block 250), for example, to stage PAO equipment, interface with plant personnel, and schedule any plant 100 and/or plant system outages, and to more generally optimize the PAO service to minimally impact normal plant 100 operations.

The PAO service may then be performed (block 252). As mentioned above, the plant-specific checklist 162 and/or the screen 196 may be used to provide a list of items to assess. The items may include equipment, personnel, and or processes. A PAO assessment team may then assess each item in the plant-specific checklist 162 and/or the screen 196 to provide for a detailed report on each item inspected. The assessment may thus result in the actionable articles 164, including the PAO report 166 shown in FIG. 2. The actionable articles 164 and the plant-specific checklist 162 may be delivered to the customer as contract deliverables (block 254). The press may then stop (block 256). In this way, a comprehensive list of actionable articles 164, including the PAO report 166, may be provided to the customer. Performing the PAO service (block 252) may enable a more efficient plant 100 minimize the impact of the disaster event on the plant 100, and may reduce the recovery time after the disaster events.

Beneficial effects of the invention include the ability to locate plants that may be impacted by unexpected events, including earthquakes, tsunamis, hurricanes, blizzards, floods, and/or tornadoes. For example, an emergency locations tool may be used to visualize plants that may be affected by the unexpected events. A preparedness assessment optimization service may then be provided for each plant, suitable for minimizing the effect of the unexpected events on the plant. The preparedness assessment optimization service may also be provided after the occurrence of the disaster event, thus minimizing recovery time for the plant, and enabling the usage of resources in the plant in a more efficient manner. A dynamic checklist tool is also provided, which may enable the derivation of a plant-specific checklist having a list of items. By assessing each item in the plant-specific checklist, a detailed plant assessment prior to or after the occurrence of the unexpected event may be produced. The detailed plant assessment may be provide as a PAO report, which may list all of the services given, inspection results, as well as any recommendations.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system comprising:
an emergency preparedness system (150) comprising:
a dynamic checklist tool (152) configured to use a master checklist (170) to produce a plant-specific checklist (162) based on a selection of at least one emergency event, and to produce actionable articles (164) having at least one emergency preparedness recommendation for a plant.

2. The system of claim 1, comprising an inference engine (154) configured to use the plant-specific checklist (162) and knowledge rules to infer the at least one emergency preparedness recommendation, wherein the knowledge rules are stored in a knowledge repository (158).

3. The system of claim 2, wherein the inference engine (154) comprises an expert system.

4. The system of any preceding claim, comprising an emergency locations tool (156), wherein the emergency locations tool (156) is configured to use the at least one emergency event and a geographic location to identify the plant.

5. The system of any of claims 1 to 3, comprising an emergency locations tool (156), wherein the emergency locations tool (156) is configured to visually present a plurality of plant icons (176) overlaid on a map (174) and information related to each plant icon (176).

6. The system of any preceding claim, wherein the plant comprises a power plant (100) having a turbine system (126), and the at least one emergency preparedness recommendation comprises a turbine system (126) recommendation.

7. The system of claim 6, wherein the turbine system (126) recommendation comprises a realigning or rebalancing of a shaft (133), a replacement of a turbine system (126) component, an upgrade of the turbine system (126) component, a repair of the turbine system (126) component, or a combination thereof.

8. The system of any of claims 1 to 5, wherein the plant comprises an integrated gasification combined cycle (IGCC) power plant (100), and the at least one recommendation comprises a feedstock preparation unit (104) recommendation, a gasifier (106) recommendation, a gas treatment unit (110) recommendation, a sulfur processor (112) recommendation, a water treatment unit (114) recommendation, a gas processor (115) recommendation, a cooling tower recommendation (124), a gas turbine system (126) recommendation, an air compressor (134) system recommendation, a diluent nitrogen compressor (130) recommendation, a steam turbine (138) system recommendation, a heat recovery steam generation (HRSG) (139) recommendation, a load recommendation (136, 140), a condenser (142) recommendation, or a combination thereof.

9. The system of any of claims 1 to 5, wherein the plant comprises a power plant (100), a chemical plant, a refinery, a manufacturing plant, or a combination thereof.
